(19) Europäisches Patentamt
European Patent Office
Office européen des brevets

(11) **EP 2 126 532 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(21) Anmeldenummer: 08716931.4

(22) Anmeldetag: **19.02.2008**

(51) Int Cl.:
***G01K 1/20*** *(2006.01)*     ***B60H 1/00*** *(2006.01)*

(86) Internationale Anmeldenummer:
**PCT/EP2008/051981**

(87) Internationale Veröffentlichungsnummer:
**WO 2008/101918 (28.08.2008 Gazette 2008/35)**

(54) **REGELUNG DER INNENRAUMTEMPERATUR IN DEM FAHRGASTRAUM EINES FAHRZEUGES**

CONTROL OF THE INSIDE TEMPERATURE IN THE PASSENGER COMPARTMENT OF A VEHICLE

RÉGULATION DE LA TEMPÉRATURE À L'INTÉRIEUR DE L'HABITACLE D'UN VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.02.2007 DE 102007009079**

(43) Veröffentlichungstag der Anmeldung:
**02.12.2009 Patentblatt 2009/49**

(73) Patentinhaber: **Behr-Hella Thermocontrol GmbH 70190 Stuttgart (DE)**

(72) Erfinder: **KNITTEL, Otto 59494 Soest (DE)**

(74) Vertreter: **von Kreisler Selting Werner Deichmannhaus am Dom Bahnhofsvorplatz 1 50667 Köln (DE)**

(56) Entgegenhaltungen:
**US-A- 5 040 455     US-A- 5 205 781 US-A- 6 123 146**

**Beschreibung**

Die Erfindung betrifft eine Vorrichtung zur Regelung der Innenraumtemperatur in einem Fahrgastraum eines Fahrzeuges sowie ein Fahrzeug mit einer derartigen Innenraumtemperaturregelung.

Für die Regelung der Innenraumtemperatur bei Fahrzeugen ist unter anderem die Außentemperatur erforderlich. Die Größe der Außentemperatur wirkt sich nämlich auf die Physiologie und das Behaglichkeitsempfinden der Fahrgäste aus. So hat man beispielsweise ermittelt, dass zur Erzielung einer "gefühlten" Innenraumtemperatur von 20 °C die Luft im Innenraum im Winter um einige wenige Grad höher (beispielsweise 22 °C) sein muss, während die Temperatur der Luft im Innenraum im Sommer einige Grad weniger (beispielsweise 18 °C) sein muss. Daher weisen Klimaanlagen für Fahrzeuge neben einem Innenraumtemperatursensor regelmäßig auch einen Außentemperatursensor auf. Die modernen Klimaregelungen für Fahrzeuge verfügen über weitere Sensoren zur Ermittlung der Umgebungsbedingungen wie beispielsweise einen Sonnensensor. Ferner werden Sensoren für die Kühl- und Heizmedien der Temperieraggregate von Fahrzeugen benötigt. Der sensortechnische Aufwand für Innenraumtemperaturregelsysteme von Fahrzeugen ist also mitunter beträchtlich. Insoweit ist es wünschenswert, die Anzahl der benötigten Sensoren zu minimieren.

Aus DE-A-34 40 880 ist es bereits bekannt, mit Hilfe eines einzigen Temperatursensors ein Messsignal zu erhalten, das sowohl für die aktuelle Innentemperatur als auch für die aktuelle Außentemperatur repräsentativ ist. Der bekannte Sensor weist neben dem eigentlichen Temperaturfühler ein Wärmeleitelement auf, das mit der Karosserie des Fahrzeuges thermisch gekoppelt ist und in der Nähe des Temperaturfühlers angeordnet ist. Auf diese Weise misst also der Temperaturfühler einen Temperaturwert, der aufgrund des Wärmeleitelements von der Karosserietemperatur und damit von der Außentemperatur beeinflusst ist. Nachteilig bei dem bekannten System ist die Montage des Temperatursensors, der thermisch zur Karosserie gekoppelt sein muss.

Aus DE-A-43 41 208 und DE-A-102 61 792 ist es ferner bekannt, die Temperatur im Innenraum eines Fahrzeuges durch einen Temperatursensor zu ermitteln, der in einer Entlüftungsöffnung im hinteren Teil des Innenraums angeordnet ist. Bei Anordnung des Innenraumtemperatursensors in diesem Bereich wird eine gute "Belüftung" des Sensors mit der Innenraumluft und damit eine relativ genaue Temperaturmessung erreicht; ein Außentemperaturfühler ist hierbei aber weiterhin erforderlich.

Darüber hinaus ist es aus DE 42 01 164 und US-A-5 040 455 bekannt, ein abgestelltes, geparktes Fahrzeug über ein Sauggebläse zu entlüften, das in einer im Bereich des hinteren Stoßfängers angeordneten Entlüftungsöffnung angeordnet ist. Die Temperatur der aus dem Innenraum des geparkten Fahrzeuges herausgeführten Lüft wird dabei mittels eines Sensors erfasst. Mit diesem Sensor wird also in der bekannten Applikation weder die Innenraumtemperatur noch die Außentemperatur erfasst, so dass zum Erhalt beider Messgrößen separate Sensoren erforderlich sind.

Aus DE-C-38 26 329 ist ein temperaturkompensierter Innenraumtemperatursensor bekannt, der zwei miteinander verschaltete Temperaturfühler aufweist. Der erste Temperaturfühler misst dabei die Temperatur der Luft, der der erste Temperaturfühler ausgesetzt ist, während der zweite Sensor die Temperatur des Ortes und/oder des Materials erfasst, an dem der erste Temperaturfühler angeordnet ist. US-A-6 123 146 offenbart einen Innenraumtemperatursensor für ein Kraftfahrzeug, mit dem zusätzlich die Aussentemperatur geschätzt wird.

Aufgabe der Erfindung ist es, eine Vorrichtung zur Regelung der Innenraumtemperatur in dem Fahrgastraum eines Fahrzeuges zu schaffen, bei der der Aufwand für die Lufttemperatursensorik minimiert ist und diese Sensorik auf einfache Art und Weise im Fahrzeug montierbar ist.

Zur Lösung dieser Aufgabe wird mit der Erfindung eine Vorrichtung zur Regelung der Innenraumtemperatur in dem Fahrgastraum eines Fahrzeuges vorgeschlagen, wobei die Vorrichtung versehen ist mit

- einem Innenraumtemperaturregler zur Regelung der Innenraumtemperatur des Fahrgastraums auf einen vorgebbaren Sollwert in Abhängigkeit von der Differenz aus dem Sollwert und einem Istwert am Eingang des Innenraumtemperaturreglers,
- einem Sollwertgeber zur Vorgabe des Innenraumtemperatur-Sollwerts und
- einem Temperatursensor zur Messung eines Temperaturwerts als Istwert zur Bildung der Differenz am Eingang des Innenraumtemperaturreglers.

Bei der erfindungsgemäßen Vorrichtung ist erfindungsgemäß vorgesehen, dass der Temperatursensor in einer vom Fahrgastraum nach außen führenden Entlüftungsströmung angeordnet ist, und zwar dergestalt, dass mit dem Temperatursensor ein Temperaturwert messbar ist, bei dem es sich um eine Kombination aus den Temperaturen der Luft im Fahrgastraum und der das Fahrzeug umgebenden Außenluft handelt. Die Entlüftungsöffnung befindet sich dabei in der Karosserie des Fahrzeuges, d. h. in dessen Außenhaut.

Mit der Erfindung wird also sinngemäß vorgeschlagen, mit Hilfe eines einzigen Temperatursensors ein Messsignal zu erzeugen, das einen sowohl die Innenraumtemperatur als auch die Außentemperatur repräsentierenden Wert aufweist. Erfindungsgemäß ist der einzige diese beide Lufttemperaturen messende Temperatursensor in, an oder in der Nähe einer Entlüftungsöffnung des Fahrzeuges angeordnet, durch die der Fahrgastraum nach außen entlüftet wird. Die Position und/oder Halterung des Temperatursensors beeinflusst die Kopplung des Temperatursensors an den Innenraum bzw. an die Umgebung. Je näher der Temperatursensor beispielsweise zur Karosserie des Fahrzeuges angeordnet ist, umso stärker ist der Einfluss der Außentemperatur auf das Messsignal und umso schwächer ist der Einfluss der Innenraumtemperatur auf das Messsignal.

Zweckmäßigerweise ist also erfindungsgemäß der Temperatursensor einerseits der durch die Entlüftungsöffnung strömende Luft ausgesetzt und andererseits mit der Außenluft und/oder einer der Außenluft ausgesetzten Komponente des Fahrzeuges thermisch gekoppelt, wobei mit dem Temperatursensor damit ein Temperaturwert messbar ist, bei dem es sich um eine Kombination aus den Temperaturen der Luft im Fahrgastraum und der das Fahrzeug umgebenden Außenluft handelt.

Ganz allgemein kann man sagen, dass der Messwert $T_{SENSOR}$ des Temperatursensors sich wie folgt aus den aktuellen Werten für die Lufttemperaturen $T_{INNEN}$ und $T_{AUSSEN}$ der Luft im Fahrgastraum und außerhalb des Fahrzeuges zusammensetzt:

$$T_{SENSOR} = m \times T_{INNEN} + (1-m) \times T_{AUSSEN},$$

wobei m ein Wichtungsfaktor ist, der zwischen 0 und 1 liegt und dessen Größe von der mechanischen Ausgestaltung der Temperatursensorhalterung und der Anbringungsposition des Temperatursensors in der Entlüftungsöffnung ist.

Wie bereits oben ausgeführt, wird mit der Erfindung also vorgeschlagen, die Temperatur z.B. innerhalb der Innenraumentlüftungsöffnung zu messen. Diese Temperatur ist ein Maß für die Innenraumtemperatur und für deren Beeinflussung durch die am Ort des Temperatursensors einwirkende Außentemperatur. Auf diese Weise bildet sich ein gewisser Gradient zur am Ort des Fahrers gegebenen Innentemperatur. Dieser Gradient ist ein Maß für die Außentemperatur. Der Messwert des Temperatursensors kann nun als Istwert für die Innenraumtemperaturregelung eingesetzt werden, um bei niedrigen Außentemperaturen höhere Innentemperaturen und bei höheren Außentemperaturen niedrigere Innentemperaturen als Istwerte rückzuführen, um so dem physiologischen Empfinden des Menschen Rechnung zu tragen. Die gewünschte Beeinflussung der Außentemperatur auf den Istwert der Innentemperatur wird durch entsprechende Anbringung des Temperatursensors und entsprechende Wahl des Anbringungsortes des Temperatursensors in, an oder in der Nähe der Entlüftungsöffnung und ohne zusätzlichen Außenfühler erreicht.

Mit der Erfindung ist es also möglich, auf eine Außentemperatursensorik zu verzichten. Dies reduziert die Hardware-Komponenten und damit die Gesamtkosten für die Innenraumtemperaturregelung. Der Temperatursensor ist, da in, an oder in der Nähe der Entlüftungsöffnung angeordnet, stets der Entlüftungsströmung ausgesetzt, so dass es einer Zwangsbelüftung dieses Sensors durch einen Belüftungsmotor, wie es mitunter bei Innenraumtemperaturregelungen anzutreffen ist, nicht bedarf. Damit entfallen weitere Bauteilkosten. Der Entfall einer derartigen zusätzlichen Komponente reduziert die Gefahr von Fehlfunktionen der Innenraumtemperaturregelung in Folge mechanischen Verschleißes und von Verschmutzung, denen derartige zusätzliche Komponenten unterliegen.

Des weiteren wird die oben genannte, der Erfindung zu Grunde liegende Aufgabe auch durch ein Fahrzeug, insbesondere Kraftfahrzeug gelöst, das versehen ist mit

- einem Fahrgastraum,
- einem Temperier- und Luftstromerzeugungsaggregat zur Einstellung der Temperatur und des Durchsatzes von dem Fahrgastraum zuzuführender Luft,
- einem vom Fahrgastraum nach außen führenden Entlüftungsöffnung, einem Innenraumtemperaturregler zur Regelung der Innenraumtemperatur des Fahrgastraums auf einen vorgebbaren Sollwert in Abhängigkeit von der Differenz aus dem Sollwert und einem Istwert am Eingang des Innenraumtemperaturreglers,
- einem Sollwertgeber zur Vorgabe des Innenraumtemperatur-Sollwerts und
- einem Temperatursensor zur Messung eines Temperaturwerts als Istwert zur Bildung der Differenz am Eingang des Innenraumtemperaturreglers,
- wobei der Innenraumtemperatursensor in, an oder in der Nähe der Entlüftungsöffnung angeordnet ist, und zwar dergestalt, dass mit dem Temperatursensor ein Temperaturwert messbar ist, bei dem es sich um eine Kombination aus den Temperaturen der Luft im Fahrgastraum und der das Fahrzeug umgebenden Außenluft handelt.

Die Erfindung umfasst somit eine Temperaturregelungsvorrichtung und ein Fahrzeug mit einer derartigen Temperaturregelungsvorrichtung mit der ein Verfahren zur Regelung der Innenraumtemperatur eines Fahrzeuges angeführt werden kann, bei dem die Innenraumtemperatur des Fahrgastraumes auf einen vorgebbaren Sollwert geregelt wird, und zwar in Abhängigkeit von der Differenz aus dem Sollwert und einem Istwert der Temperatur im Innenraum, wobei der Istwert mit Hilfe eines (einzigen) Temperatursensors, der in einer Entlüftungsöffnung des Fahrzeuges angeordnet wird und dessen Messsignal durch die Temperatur der vom Innenraum nach außen abgeführten Luft und der Temperatur der Außenluft bestimmt ist.

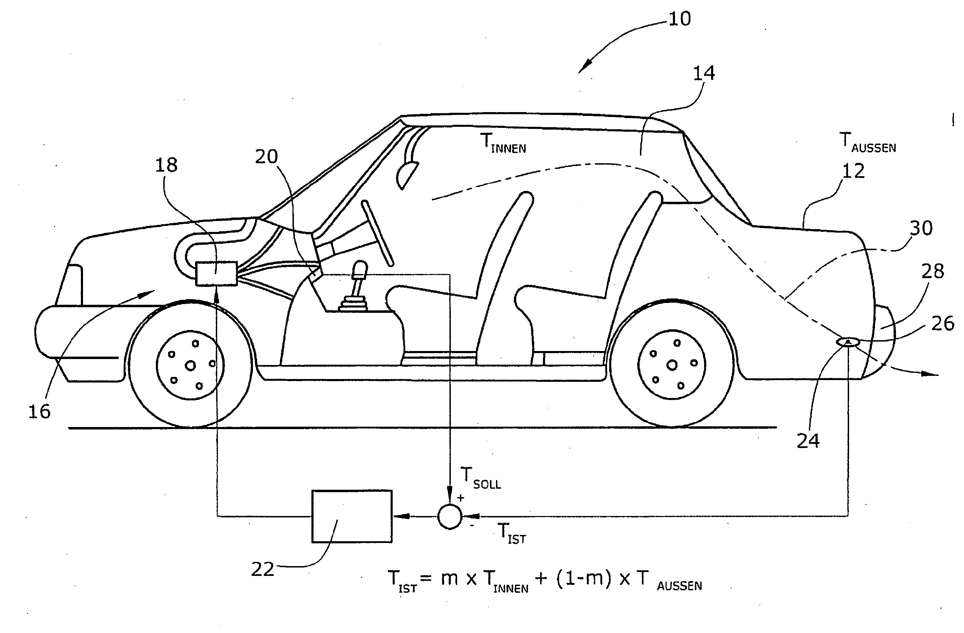

Die Erfindung wird nachfolgend anhand eines Ausführungsbeispiels und unter Verweis auf die Zeichnung näher erläutert.

In der Zeichnung ist schematisch ein Fahrzeug 10 mit den für die Erfindung wesentlichen Komponenten einer Innenraumtemperaturregelung gezeigt. Das Fahrzeug 10 weist eine Karosserie 12 auf, die unter anderem einen Fahrgastraum 14 umgibt. In den Fahrgastraum 14 führt von außen ein Luftkanalsystem 16 hinein, das ein Temperier- und Luftströmungserzeugungsaggregat 18 aufweist. Dieses Aggregat verfügt über ein Gebläse, Luftverteilklappen und eine Heiz- sowie eine Kühleinrichtung, die als einzelne Komponenten vorliegen, was aus Vereinfachungsgründen in der Zeichnung nicht näher dargestellt ist.

Im Innern des Fahrgastraums 14 befindet sich ein Sollwertgeber 20, mit dem die Insassen einen Sollwert für die Innenraumtemperatur $T_{INNEN}$ vorgeben können, auf den die Luft im Fahrgastraum 14 geregelt wird. Zu diesem Zweck weist das Fahrzeug 10 einen Innenraumtemperaturregler 22 auf, der das Temperier- und Luftströmungserzeugungsaggregat 18 ansteuert. Am Eingang des Innenraumtemperaturreglers 22 empfängt dieser als Regeldifferenz die Differenz zwischen dem Sollwert $T_{SOLL}$ und dem Istwert $T_{IST}$ für die Innenraumtemperatur. Der Istwert wird dabei mit Hilfe eines einzigen vorzugsweise als Thermistor (NTC oder PTC) ausgeführten Temperatursensors 24 gemessen, der sich in einer Entlüftungsöffnung 26 des Fahrzeuges 10 befindet, welche den Fahrgastraum 14 mit dem Bereich außerhalb des Fahrzeuges 10 verbindet. Eine derartige Entlüftungsöffnung 26 befindet sich im allgemeinen hinter dem hinteren Stoßfänger 28 des Fahrzeuges und ist zum Schutz vor dem Eindringen von Nässe und Verschmutzungen nach außen hin durch eine Klappe verschlossen (nicht dargestellt), die sich automatisch öffnet, wenn Innenraumluft durch den Entlüftungsöffnung 26 nach außen strömt.

Das Messsignal des Temperatursensors 24, der der Entlüftungsströmung 30 ausgesetzt ist, ist eine Kombination aus normierten, gewichteten Werten für die Temperaturen $T_{INNEN}$ und $T_{AUSSEN}$ der Luft im Fahrgastraum 14 und außerhalb des Fahrzeuges, wie es in der Zeichnung angegeben ist. Die komplementäre Wichtung, d.h. der Wichtungsfaktor m ist dabei abhängig von der mechanischen Halterung des Temperatursensors 24 in der Entlüftungsöffnung 26 sowie der Position des Temperatursensors 24 innerhalb der Entlüftungsöffnung 26. Durch empirische Untersuchungen wird im vorhinein ermittelt, welche Messwerte sich bei unterschiedlichen Temperaturwerten für die Luft im Innenraum und unterschiedlichen Temperaturwerten für die Außenluft einstellen. Diese Messwerte können dann in einer Tabelle oder einem Kennlinienfeld abgelegt werden, auf die bzw. auf das während der Innenraumtemperaturregelung dann zugegriffen werden kann. Damit ist eine Behaglichkeitsregelung im Fahrgastraum des Fahrzeuges möglich, ohne dass es eines separaten Außentemperatursensors bedarf. Somit ist der Gesamtaufwand für die Innenraumtemperaturregelung reduziert, was die Sensorik betrifft.

## BEZUGSZEICHENLISTE

10 Fahrzeug
12 Karosserie
14 Fahrgastraum
16 Luftkanalsystem
18 Temperier- und Luftströmungserzeugungsaggregat
20 Sollwertgeber für die Innenraumtemperatur
22 Innenraumtemperaturregler
24 Temperatursensor
26 Entlüftungsöffnung
28 Stoßfänger
30 Entlüftungsströmung

## Patentansprüche

1. Vorrichtung zur Regelung der Innenraumtemperatur in dem Fahrgastraum eines Fahrzeuges, mit

- einem Innenraumtemperaturregler (22) zur Regelung der Innenraumtemperatur des Fahrgastraums (14) auf einen vorgebbaren Sollwert ($T_{SOLL}$) in Abhängigkeit von der Differenz aus dem Sollwert ($T_{SOLL}$) und einem Istwert ($T_{IST}$) am Eingang des Innenraumtemperaturreglers (22),
- einem Sollwertgeber (20) zur Vorgabe des Innenraumtemperatur-Sollwerts ($T_{SOLL}$) und

- einem Temperatursensor (24) zur Messung eines Temperaturwerts als Istwert ($T_{IST}$) zur Bildung der Differenz am Eingang des Innenraumtemperaturreglers (22),
**dadurch gekennzeichnet,**
- **dass** der Temperatursensor (24) zur Anordnung in oder an einer vom Fahrgastraum (14) nach außen führenden Entlüftungsöffnung (26) des Fahrzeuges vorgesehen ist, und zwar dergestalt, dass mit dem Temperatursensor (24) ein Temperaturwert messbar ist, bei dem es sich um eine Kombination aus den Temperaturen der Luft im Fahrgastraum (14) und der das Fahrzeug umgebenden Außenluft handelt.

2. Vorrichtung nach Anspruch 1, **dadurch gekennzeichnet, dass** der Temperatursensor (24) einerseits der durch die Entlüftungsöffnung (26) strömenden Luft aus dem Fahrgastraum ausgesetzt und andererseits mit der Außenluft und/oder einer der Außenluft ausgesetzten Komponente des Fahrzeuges thermisch gekoppelt ist, wobei mit dem Temperatursensor ein Temperaturwert messbar ist, bei dem es sich um eine Kombination aus den Temperaturen der Luft im Fahrgastraum und der das Fahrzeug umgebenden Außenluft handelt.

3. Vorrichtung nach Anspruch 1 oder 2, **dadurch gekennzeichnet, dass** der Temperatursensor (24) einen einzigen Temperaturfühler aufweist.

4. Vorrichtung nach einem der Ansprüche 1 bis 3, **dadurch gekennzeichnet, dass** der Temperatursensor (24) als Thermistor ausgebildet ist.

5. Fahrzeug, insbesondere Kraftfahrzeug, mit

   - einem Fahrgastraum (14),
   - einem Temperier- und Luftstromerzeugungsaggregat (18) zur Einstellung der Temperatur und des Durchsatzes von dem Fahrgastraum (14) zuzuführender Luft,
   - einem vom Fahrgastraum (14) nach außen führenden Entlüftungsöffnung (26) und
   - einer Vorrichtung zur Regelung der Innenraumtemperatur nach einem der Ansprüche 1 oder 2.

**Claims**

1. Device for controlling the inside temperature in the passenger compartment of a vehicle, comprising

   - an inside temperature control (22) for controlling the inside temperature of the passenger compartment (14) to a predeterminable set value ($T_{SET}$) as a function of the difference from the set value ($T_{SET}$) and an actual value ($T_{ACTUAL}$) at the input of the inside temperature control (22),
   - a setpoint device (20) for predetermining the set value ($T_{SET}$) of the inside temperature, and
   - a temperature sensor (24) for measuring a temperature value as an actual value ($T_{ACTUAL}$) for forming said difference at the input of the inside temperature control (22),
   **characterized in that**
   - the temperature sensor (24) is provided for arrangement in or at a venting opening (26) leading to the outside from the passenger compartment (14), such that the temperature sensor (24) allows to measure a temperature value which is a combination of the temperatures of the air in the passenger compartment (14) and the ambient air around the vehicle.

2. Device of claim 1, **characterized in that** the temperature sensor (24) is exposed, on the one hand, to air from the passenger compartment flowing through the venting opening (26) and, on the other hand, is thermally coupled with ambient air and/or a component of the vehicle exposed to ambient air, the temperature sensor allowing the measurement of a temperature value which is a combination of the temperatures of the air in the passenger compartment and the ambient air around the vehicle.

3. Device of claim 1 or 2, **characterized in that** the temperature sensor (24) comprises a single temperature probe.

4. Device of one of claims 1 to 3, **characterized in that** the temperature sensor (24) is configured as a thermistor.

5. Vehicle, in particular a motor vehicle, comprising:

   - a passenger compartment (14),

- a temperature control and airflow generator aggregate (18) for setting the temperature and the throughput of air to be supplied to the passenger compartment (14),
- a venting opening (26) leading to the outside from the passenger compartment (14), and
- a device for controlling the inside temperature according to one of claims 1 or 2.

## Revendications

1. Dispositif de régulation de la température à l'intérieur de l'habitacle d'un véhicule, comprenant

   - un régulateur de la température intérieure (22) pour la régulation de la température à l'intérieur de l'habitacle (14) à une valeur de consigne ($T_{CONSIGNE}$) prédéterminable en fonction de la différence entre la valeur de consigne ($T_{CONSIGNE}$) et une valeur réelle ($T_{RÉELLE}$) à l'entrée du régulateur de la température intérieure (22),
   - un générateur de valeur de consigne (20) pour prédéterminer la valeur de consigne ($T_{CONSIGNE}$) de la température intérieure, et
   - un capteur de température (24) pour mesurer une valeur de température comme une valeur réelle ($T_{RÉELLE}$) afin de former la différence à l'entrée du régulateur de la température intérieure (22),
   **caractérisé en ce que**
   - ledit capteur de température (24) est propre à être dans ou à une ouverture de ventilation (26) du voiture menant de l'habitacle (14) à l'extérieur, de sorte que ledit capteur de température (24) est apte à mesurer une température qui est une combinaison des températures de l'air dans l'habitacle (14) et de l'air ambiant autour du véhicule.

2. Dispositif selon la revendication 1, **caractérisé en ce que** le capteur de température (24) est exposé, d'une part, à l'air venant de l'habitacle et s'écoulant à travers ladite ouverture de ventilation (26) et, d'autre part, est couplé thermiquement à l'air ambiant et/ou à un élément du véhicule exposé à l'air ambiant, ledit capteur de température étant apte à mesurer une température qui est une combinaison des températures de l'air dans l'habitacle et de l'air ambiant autour du véhicule.

3. Dispositif selon la revendication 1 ou 2, **caractérisé en ce que** le capteur de température (24) comprend une seule sonde de température.

4. Dispositif selon les revendications 1 à 3, **caractérisé en ce que** le capteur de température (24) est configuré comme un thermistor.

5. Véhicule, en particulier véhicule motorisé, comprenant

   - un habitacle (14),
   - une unité (18) de l'équilibration de température et de génération d'un écoulement d'air pour ajuster la température et le débit de l'air à refouler vers l'habitacle (14),
   - une ouverture de ventilation (26) menant de l'habitacle (14) vers l'extérieur, et
   - un dispositif de réglage de la température intérieure selon une des revendications 1 et 2.

$T_{INNEN}$

$T_{AUSSEN}$

$T_{SOLL}$

$T_{IST}$

$T_{IST} = m \times T_{INNEN} + (1-m) \times T_{AUSSEN}$

EP 2 126 532 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3440880 A
- DE 4341208 A
- DE 10261792 A
- DE 4201164
- US 5040455 A
- DE 3826329 C
- US 6123146 A